# EUROPEAN PATENT APPLICATION

(11) **EP 1 387 246 A1**
(43) Date of publication of application: **04.02.2004**
(21) Application number: 02425492.2
(22) Date of filing: 30.07.2002
(51) Int. Cl.: G06F 3/147, G06F 9/44, H04M 1/02, H04M 1/247, G06K 11/16, G06F 3/033, G06F 1/16

(54) **User interface and method for displaying information on a plurality of displays**

(71) Applicant: MOTOROLA, INC., Schaumburg, IL 60196 (US); Motorola, Inc., Libertyville, IL 60048 (US)
(72) Inventor: Andren, Stefan, 20143 Milano (IT); Godston, Jon, Milano (IT)
(74) Representative: Gibson, Sarah Jane

(57) **Abstract**

The present invention provides a user interface for managing the display of similar information on a plurality of displays (108, 120) having different dimensional characteristics. The user interface includes multiple sets of display screens including one or more information screens, which are each formatted for presentation on a corresponding one of the displays (108, 120). As the device (100) incorporating the user interface is reconfigured and/or reoriented, the information being presented to the user is appropriately configured and formatted corresponding to the dimensional characteristics of the display(s) that is currently available to the user. The present invention additionally provides a display (108), which when illuminated, is viewable through an external surface of a cover (102) for a two-part clam shell housing. The display (108) additionally allows for the touch selection of various displayed options using a touch sensitive film (112) located behind a tinted lens (110).

## Description

### FIELD OF THE INVENTION

The present invention relates generally to the user interfaces for displaying information on a plurality of displays and, more particularly, to user interfaces that include multiple sets of display screens, for individually formatting similar information portrayed on respective displays having different dimensional characteristics.

### BACKGROUND OF THE INVENTION

Consumers have a seemingly unsatisfiable desire for portable electronic devices providing greater convenience and having greater functionality. In addition to wanting greater convenience and greater functionality consumers want the same without compromising style and aesthetic appeal. Developing products, which more closely meets these desires, provides a constant challenge for product designers.

One such design style, which has been developed in an attempt to more closely satisfy consumer desires, is a clam shell style device having a foldable two part housing. The clam shell style device enables the two part housing to fold open for use when performing at least some of the principal functions of the device, especially where ease of use is dictated by minimal size requirements, and to fold close for easier storage and handling when the same principal functions are no longer needing to be performed. For example, a clam shell style phone can fold open when a call is to be placed. Folding open the housing can facilitate making a call using the phone by extending the folded length of the device, thereby making it possible to place a microphone proximate the user's mouth and a speaker proximate the user's ear. When folded, the housing for the clam shell style phone is not long enough to extend between the user's mouth and the user's ear. However when folded the phone can more easily be placed in a user's pocket or a user's handbag.

In at least some instances, the clam shell style device has been cited as having the further benefit of protecting certain features of the device, which are located internally, when the device is folded into a close position. For example, several types of clam shell style phones have displays and keypads, which are protected, internally, when the two part housing is rotated into a close position.

However, some devices have displays, which continue to be externally exposed, when the housing is rotated into a close position. In many of these instances a small display enabling the simultaneous presentation of up to a couple lines of text have been used for functions like caller ID or for displaying the current time and date. These displays have been protected in part by their limited size.

However as greater functionality is incorporated into these devices for performing additional functions, there exists a need for a more versatile external display, which is available, when the housing is in a close position. Displays that are sometimes larger, displays that can reproduce graphics, and displays that can receive user input are becoming increasingly important for supporting the additional functions. Steps for insuring that the display is properly protected is also necessary, as well as steps for insuring that a suitable display is incorporated in a manner, which does not negatively impact the visual appeal. Despite being more versatile, an external display upgraded to incorporate some of the additional functionality noted above will still often have differing dimensional characteristics from a display that is located internally, when the housing is closed.

In still further instances, sometimes the features being added can require that certain information be visually displayed and/or user input be received, while the device is either in an open position or a close position. It may further be desirable to allow for the housing of the device to transition between the open and close positions, and correspondingly allow for the user to similarly transition between multiple displays, some of which may only be visible when the housing for the device is open, without interrupting the performance of a particular function.

Consequently, there is a need for a portable electronic device having a more versatile display including a user interface for managing the presentation of information onto the display. In addition, the desired user interface should accommodate multiple displays having different dimensional characteristics. It would be further beneficial if the more versatile display were suitably protected and incorporated in a manner, which does not detract from the overall visual appeal of the device.

### SUMMARY OF THE INVENTION

The present invention provides a user interface for managing the display of similar information on a plurality of displays having different dimensional characteristics. The user interface has a first set of display screens, which includes one or more information screens, which are formatted for presentation on a first display. The user interface additionally has a second set of display screens, which includes one or more information screens, which are formatted for presentation on a second display, where each information screen is associated with a corresponding one of the one or more information screens of the first set of display screens.

In at least one embodiment, the continuity of the screens being displayed is maintained as a user shifts between viewing different displays.

The present invention additionally provides a portable electronic device having at least a two part housing, which rotate relative to one another between an open and a close position. The portable electronic device has a body and a cover coupled to the body via a hinge. A display, when active, is viewable through an external surface of the cover. The external surface of the cover additionally includes a user actuated control element.

In at least a still further embodiment, at least one of the displays includes a liquid crystal display located behind a touch sensitive film, from which the user actuated control element is formed, and a protective lens. Still further embodiments have at least one display, which includes an organic light emitting device located behind a touch sensitive film and a protective lens.

The present invention still further provides a method for managing the display of similar information on a plurality of displays having different dimensional characteristics and corresponding sets of display screens including information screens formatted for presentation on the respective display. The method includes determining if a selection has been received from the user, and detecting the viewability by the user of the plurality of displays. One or more of the viewable displays are updated to present the selected user information in conjunction with an information screen from the respective sets of display screens.

These and other object, features, and advantages of this invention are evident from the following description of one or more preferred embodiments of this invention, with reference to the accompanying drawings.

### BRIEF DESCRIPTION OF THE DRAWINGS

FIG. 1 is a perspective view of a wireless communication device having a two-part housing shown in a close position, in accordance with at least one embodiment of the present invention;
FIG. 2 is a front plan view of the radiotelephone illustrated in FIG. 1, with the external display non-illuminated;
FIG. 3 is a front plan view of the radiotelephone illustrated in FIG. 1, with the display illuminated;
FIG. 4 is a cross sectional view illustrating the multiple layers associated with the external display illustrated in FIG. 3;
FIG. 5 is a front perspective view of the radiotelephone illustrated in FIG. 1, shown in an open position;
FIG. 6 is a block diagram of a conventional wireless communication device, which could incorporate the present invention; and
FIG. 7 is a flow chart of a method for displaying similar information on a plurality of displays, in accordance with at least one embodiment of the present invention.

### DETAILED DESCRIPTION OF THE PREFERRED EMBODIMENT(S)

While the present invention is susceptible of embodiment in various forms, there is shown in the drawings and will hereinafter be described presently preferred embodiments with the understanding that the present disclosure is to be considered an exemplification of the invention and is not intended to limit the invention to the specific embodiments illustrated.

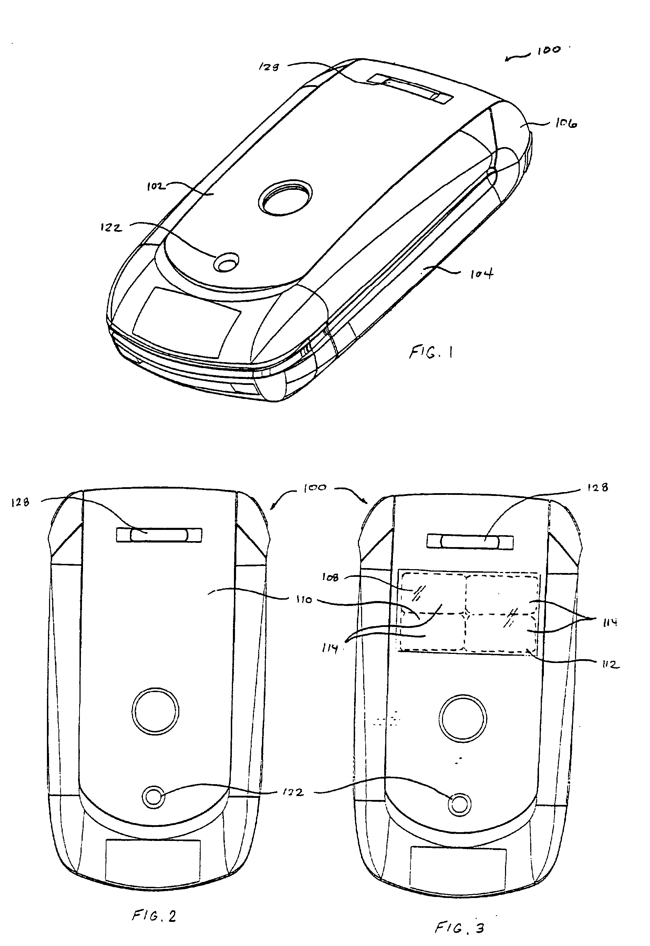

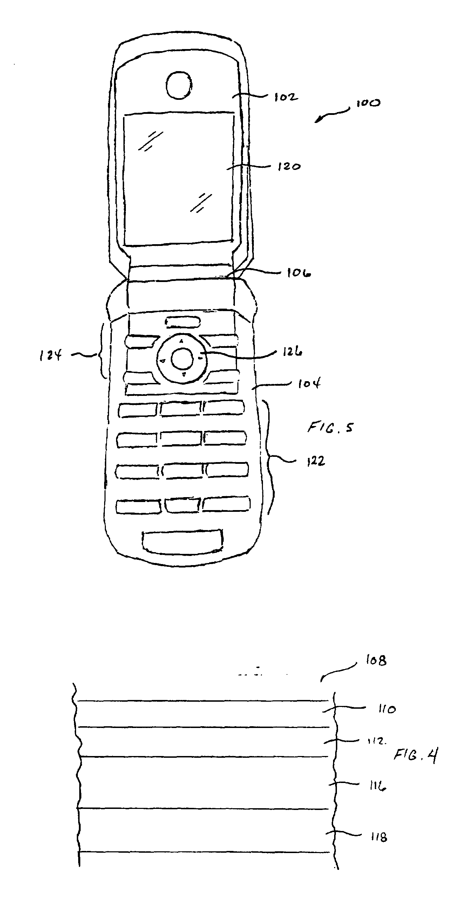

In FIG. 1, a wireless communication device or radiotelephone 100 is illustrated. The radiotelephone 100 is of the clam shell design type, where the housing has two portions, a cover 102 and a base 104, which are coupled together and fold with respect to one another via a hinge 106. In FIG. 1 the housing is illustrated in a close position. FIGS. 2 and 3 are front plan views of the radiotelephone 100 illustrated in FIG. 1. In FIG. 3, an external display 108 is visible through a tinted lens 110, which forms a portion of the surface of the front facing of the cover 102, when a back light 118 located behind the display 108 is illuminated. The cover 102 appears opaque, as in FIG. 2, when the back light 118 is not illuminated. In the illustrated embodiment, activation of the external display 108 including illumination of the back light 118 initially occurs, when a touch screen activation button 128 is pressed.

The display 108 additionally includes a touch sensitive layer 112, which in the illustrated embodiment is divided into four separate touch sensitive zones 114. The four separate touch sensitive zones 114 can be used to distinguish which one of the four separately defined regions a user is touching. Alternatively, the zones 114 can be separately combined to form fewer distinguishable zones. For example, the left two zones and the right two zones could be separately combined to form two distinct regions, which are capable of being distinguished. Still further the top two zones and the bottom two zones could alternatively be combined. A still further example would combine all four zones so as to define a single touch sensitive zone. These zones could be dynamically configured to accommodate the needs of the function being performed by the device. It is further possible that the display 108 could be initially alternatively constructed to define and include more than the four zones 114, illustrated in FIG. 3.

The device illustrated in FIGS. 1-3 additionally includes an aperture 122 for a camera lens.

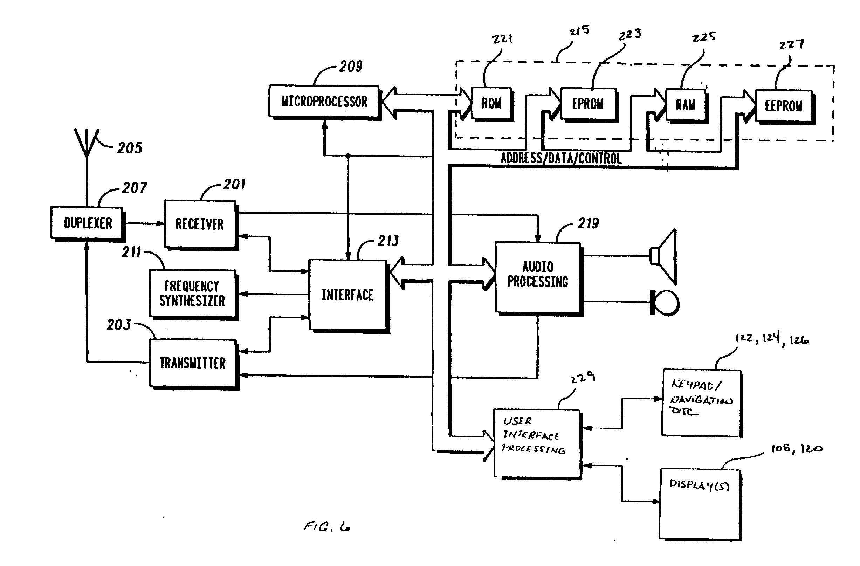

FIG. 4 is a cross sectional view illustrating the multiple layers corresponding to an external display 108 in accordance with at least one embodiment of the present invention. The external display 108 includes a display element 116. In at least one embodiment, the display element is a liquid crystal display having a plurality of apertures, which can be individually controlled to selectively allow light to pass through. Different groups of the apertures can be alternatively colorized using red, green and blue, and controlled, to allow color images to be formed. The light, which passes through the apertures, is formed by a back light 118. It is possible that the same back light 118 could be used to illuminate a second display located on the opposite surface of cover and facing in the opposite direction. One possible example includes the interior display 120, illustrated in FIG. 5, which is only visible when the housing is rotated into an open position.

In addition to the display being formed from a liquid crystal display, other suitable technologies are also available. For example, the display could be alternatively formed using an organic light emitting device (OLED) display. OLED displays include a series of organic thin films coupled between a pair of conductors, which when a current is applied emit a bright light.

The external display 108 additionally includes a touch sensitive layer 112 and a tinted protective lens 110. Because the touch sensitive layer is formed using a capacitive-based touch sensitive film, the touch sensitive layer 112 can be located behind the tinted protective lens 110. The lens is tinted so as to be substantially opaque when the display is not illuminated, and to allow images formed on the display to be visible when the back lighting is illuminated. The tinting can be colored so as to correspond to the appearance of the front facing of the other related portions of the cover 102. The surface of the lens can be additionally contoured to follow the surface of the other portions of the front facing of the cover 102.

FIG. 5 illustrates a wireless communication device 100 with the housing rotated to an open position. In the open position an internal display 120 and a keypad 122 are exposed to allow access to a user. Additional user control keys 124 including a navigation disc 126 allow for the selection and control of elements being presented on the display 120.

Due to cost and space constraints, even with the increased versatility of the external display 108, the internal and external displays generally continue to have different dimensional characteristics. There are times when it is desirable to simultaneously display similar information on each of the displays either alternatively or simultaneously without interrupting the continuity of the information being presented to the user. Because the displays 108 and 120 generally have different dimensional characteristics, this may require separate formatting to maximize the use of each of the displays. The different dimensional characteristics can include a different screen resolution in each of the vertical and horizontal direction, or can include a different aspect ratio.

The present invention includes a user interface, which includes a separate set of related information screens for presentation of information on each of the displays 108 and 120. The wireless communication additionally includes a switch, which detects when the wireless communication device is in either an open or a close position, and therefore can indirectly determine which of the displays 108 and 120 is currently visible to the user. In some instances it may be sufficient to rescale the image between displays. In other instances one screen may include a superset or a subset of the information being presented in the other corresponding screen. However in either instance the information separately included in each of the screens would be sufficient for performing the function currently being executed.

While the presently described embodiment makes use of different display elements in connection with the different displays, it is possible that different display areas of the same display element could be responsible for the different displays having different dimensional characteristics. Instead of having separate display elements located on each of the internal and the external surface of the cover, a single display element could be located on the body portion of the two part housing, and an opening in the cover having a window size smaller than the overall size of the display element could define an external display having different dimensional characteristics.

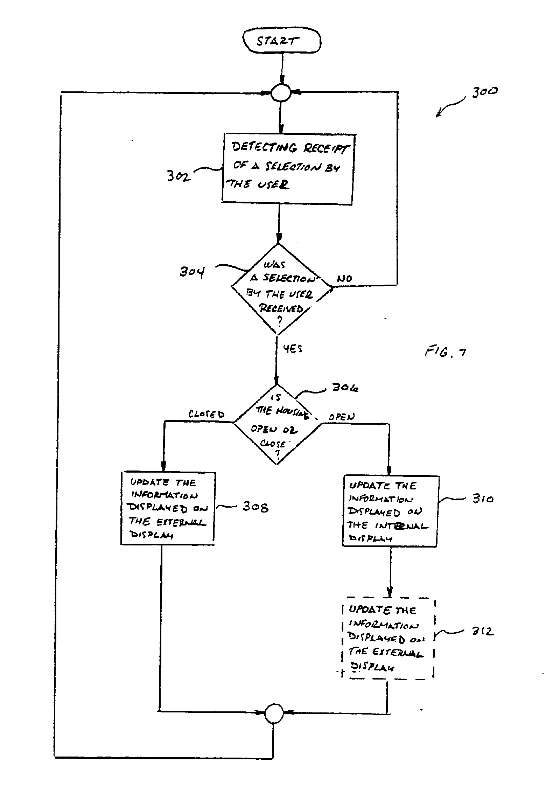

FIG. 6 illustrates a block diagram of the electronic circuitry for at least one embodiment of the wireless communication device 100 illustrated in FIGS. 1-5. A radio receiver 201 and a transmitter 203 are coupled to an antenna 205 of the wireless communication device 100 by way of a duplexer 207. The particular radio frequency to be used by the transmitter 203 and the receiver 201 is determined by the microprocessor 209 and conveyed to the frequency synthesizer 211 via the interface circuit 213. Data signals received by the receiver 201 are decoded and coupled to the microprocessor 209 by the interface circuit 213 and data signals to be transmitted by the transmitter 203 are generated by the microprocessor 209 and formatted by the interface 213 before being transmitted by the transmitter 203. Operational status of the transmitter 203 and the receiver 201 is enabled or disabled by the interface 213. Control of user audio, the microphone output and the speaker input, is controlled by audio processing circuitry 219.

In the preferred embodiment, the microprocessor 209 performs the necessary processing functions under the control of programs stored in a memory section 215, which includes one or more forms of volatile and/or non-volatile memory including conventional ROM 221, EPROM 223, RAM 225, or EEPROM 227. Characterizing features of handset 101 are typically stored in EEPROM 227 (which may also be stored in the microprocessor in an on-board EEPROM, if available) and include the number assignment (NAM) required for operation in a conventional cellular system and the base identification (BID) required for operation with the user's own cordless base.

Additionally stored in the memory section 215 are the multiple sets of display screens corresponding to each of the plurality of displays 108 and 120. Control of the information screens being presented on one or more of the displays 108, 120 is facilitated by one or both of the microprocessor 209 and the user interface processing circuitry 229. The user interface processing circuitry 229 and/or microprocessor 209 further facilitate receiving input from the user via the touch screen 112 or the keypad buttons 122, 124 and navigation disc 126. Based upon the input received, the information screens are updated accordingly.

FIG. 7 illustrates a method 300 of managing the display of similar information on a plurality of displays having different dimensional characteristics More specifically, FIG. 7 illustrates a flow diagram, consistent with at least one embodiment of the present invention. Generally as illustrated in FIG. 7, the method includes detecting receipt of a selection 302 by the user. If a selection is received 304, a determination is made 306 as to whether the housing is open or close. In this way, the viewability by the user of the plurality of displays can be determined. Depending upon which displays are viewable, one or more of the information screens being displayed on one or more of the displays is updated. For example, if the housing is close, and only the external display 108 is viewable, then the external display 108 is updated 308. If the housing is open, and the internal display 120 is viewable, then the internal display 120 is updated 310. Because the external display 108 may also continue to be viewable, it may also be desirable to continue to update 312 the external display 108. The steps are repeated consistent with the users use of the device 100 and the functions being performed by the device 100.

While the above described user interface and method for displaying similar information on a plurality of displays having different dimensional characteristics for use in a hand-held electronic device has been described in association with a clam shell style of housing having at least two housing portions, which rotate relative to one another, alternative approaches could be used in association with other styles of housing without departing from the scope of the present invention. It is to be understood that the invention is not to be limited to the preferred embodiments disclosed herein.

Still further, while the present invention has been described in connection with a radiotelephone, the present invention could be practiced with many other types of hand-held or portable electronic devices including, but not limited to, the following devices: personal digital assistants (PDAs), cameras, cordless phones, paging devices, portable computers, pen-based or keyboard-based handheld devices, remote control units, an audio player (such as an MP3 player) and the like. Accordingly, any reference herein to the radiotelephone 100 should also be considered to apply equally to other hand-held or portable electronic devices. Numerous modifications, changes, variations, substitutions and equivalents will occur to those skilled in the art without departing from the spirit and scope of the present invention as defined by the appended claims.

## Claims

1. A user interface for managing the display of similar information on a plurality of displays having different dimensional characteristics comprising:
a first set of display screens including one or more information screens, which are formatted for presentation on a first display; and
a second set of display screens including one or more information screens, which are formatted for presentation on a second display, where each information screen is associated with a corresponding one of the one or more information screens of the first set of display screens.

2. A user interface in accordance with claim 1 wherein the displays having different dimensional characteristics include displays having a different resolution in at least one of a horizontal and a vertical direction.

3. A user interface in accordance with claim 1 wherein at least some of the corresponding information screens from the first and second set of display screens are scaled so as to be appropriately sized for presentation on the respective displays having different dimensional characteristics.

4. A user interface in accordance with claim 1 wherein some of the corresponding screens from at least one of the first and second set of display screens includes additional display information.

5. A user interface in accordance with claim 1 wherein the plurality of displays include different display areas corresponding to different display elements.

6. A user interface in accordance with claim 4 wherein the plurality of displays are incorporated as part of a hand-held electronic device having a cover coupled to a body via a hinge, where a first one of different display elements, when active, is visible through an external surface of the cover, and a second one of different display elements is visible when an internal surface of the cover is exposed to the user.

7. A user interface in accordance with claim 1 wherein the plurality of displays includes different display areas of the same display element.

8. A user interface in accordance with claim 7 where only one display area is actively presenting a display screen at any given time.

9. A user interface in accordance with claim 7 where at least a first one of the display areas is defined by the size of an opening in a cover, which selectively overlays a display element, and where at least a second one of the display areas is defined by the size of the display element exposed when the cover does not overlay the display element.

10. A user interface in accordance with claim 9 where the corresponding display screen from the first set of display screens is presented in the first display area, when the cover overlays the display element, and the corresponding display screen from the second set of display screens is presented in the second display area, when the cover does not overlay the display element.

11. A user interface in accordance with claim 1 wherein at least one of the displays includes touch sensitivity in at least one or more portions of the respective display.

12. A user interface in accordance with claim 1 wherein the continuity of the screens being displayed is maintained as a user shifts between viewing different displays.

13. A portable electronic device having at least a two part housing, which rotate relative to one another between an open and a close position, comprising:
a body;
a cover; and
a hinge coupled to said body and said cover for allowing rotation of the cover relative to the body between an open and a close position;
said cover including an internal surface facing toward the body, when the portable electronic device is in a close position, and an external surface facing away from the body, when the portable electronic device is in a close position;
said external surface of said cover having a display, which is viewable through the external surface, when active, and a user actuated control element.

14. A portable electronic device in accordance with claim 13 wherein said user actuated control element includes one or more touch sensitive areas.

15. A portable electronic device in accordance with claim 13 wherein said user actuated control element is incorporated as part of said display.

16. A portable electronic device in accordance with claim 15 wherein said display and user actuated control element includes:
a display element;
a touch sensitive film; and
a lens.

17. A portable electronic device in accordance with claim 16, wherein said display element includes a liquid crystal display.

18. A portable electronic device in accordance with claim 16, wherein said display element includes an organic light emitting device.

19. A portable electronic device in accordance with claim 16, wherein said display additionally includes a back light, which is adapted to be selectively illuminated.

20. A portable electronic device in accordance with claim 19, wherein said lens is a tinted lens that is substantially translucent when the back light is on and is substantially opaque when the back light is off

21. A portable electronic device in accordance with claim 16, wherein the lens is a protective lens and wherein said touch sensitive film is a capacitive film located behind the lens.

22. A method of managing the display of similar information on a plurality of displays having different dimensional characteristics and corresponding sets of display screens including information screens formatted for presentation on the respective display comprising:
determining if a selection has been received from the user;
detecting the viewability by the user of the plurality of displays; and
updating one or more of the viewable displays to present the selected user information from the information screens of the respective sets of display screens.

23. A method in accordance with claim 22, wherein detecting the viewability by the user of the plurality of displays include detecting whether a two part housing of a clam shell style housing is open or closed.
